Europäisches Patentamt

European Patent Office

Office européen des brevets

(11) Numéro de publication: **0 115 240**
**B1**

(12) **FASCICULE DE BREVET EUROPEEN**

(45) Date de publication du fascicule du brevet: **18.05.88**

(21) Numéro de dépôt: **83402550.4**

(22) Date de dépôt: **28.12.83**

(51) Int. Cl.⁴: **H 04 M 1/72,** H 04 B 9/00, H 04 M 17/02

(54) **Poste téléphonique à liaison infrarouge bidirectionnelle entre combiné et module fixe relié à une ligne téléphonique.**

(30) Priorité: **29.12.82 FR 8222016**

(43) Date de publication de la demande: **08.08.84 Bulletin 84/32**

(45) Mention de la délivrance du brevet: **18.05.88 Bulletin 88/20**

(84) Etats contractants désignés: **DE GB NL**

(56) Documents cités:
**EP-A-0 027 833**
**EP-A-0 051 726**
**EP-A-0 066 823**
**DE-A-2 947 164**

(73) Titulaire: **Grandmougin, Michel**
**154, rue Lenain de Tillemont**
**F-93100 Montreuil-sous-Bois (FR)**

(72) Inventeur: **Grandmougin, Michel**
**154, rue Lenain de Tillemont**
**F-93100 Montreuil-sous-Bois (FR)**

(74) Mandataire: **Martinet & Lapoux**
**62, rue des Mathurins**
**F-75008 Paris (FR)**

Courier Press, Leamington Spa, England.

# Description

La présente invention concerne un poste téléphonique dont le combiné est portable et permet de télécommander les différentes phases de l'établissement et de la rupture d'une communication téléphonique à travers une liaison infrarouge bidirectionnelle desservant un module fixe intermédiaire qui est relié à la ligne téléphonique d'abonné.

Plus précisément, l'invention a trait à un poste téléphonique à liaison infrarouge utilisable dans une cabine téléphonique publique. Cette utilisation a pour but de remédier aux principaux inconvénients suivants d'une cabine téléphonique classique à poste téléphonique à prépaiement par pièce ou par carte magnétique ou holographique:

—fraude en vue d'obtenir une communication sans payer, ou vandalisme, dû à la possibilité de manipuler des pièces mécaniques du poste téléphonique telles que le cadran ou clavier de numérotation ou le crochet de commutation qui sont facilement accessibles par les usagers;

—suite à l'inconvénient précédent, stockage de pièces mécaniques des postes téléphoniques;

—hygiène "douteuse" du combiné manipulé par tous les usagers;

—manipulation d'argent, relevage des caisses de recette, gestion des clés et des tournées pour les postes à prépaiement par pièces;

—vente des cartes et collecte des recettes des revendeurs de cartes pour les postes à prépaiement par carte.

Un poste téléphonique de ce type est décrit dans le brevet DE—A—2.947.167 concernant un système de télécommunications. Dans ce système, des postes portatifs sont couplés par liaison radioélectrique, optique ou ultra-sonore, à des terminaux placés en des lieux publics et raccordés au réseau afin d'établir des liaisons de télécommunication vers des terminaux d'abonnés. Un poste portatif est ici équipé d'une "mémoire de crédit" renouvelable, moyennant paiement, et donnant droit à un crédit d'appels limité. Toutefois, dans ces postes de télécommunication ne sont prévues aucune protections sérieuses contre des tentatives de fraude en vue d'obtenir une communication sans payer. Par ailleurs, ces postes portatifs sont peu personnalisés et peuvent être facilement dérobés et utilisés par des tiers.

La présente invention vise à fournir un poste téléphonique public à liaison infrarouge dont le module fixe permet l'établissement d'une communication à tout usager possédant un combiné portable particulier, tout en assurant une véritable personnalisation du combiné afin que chaque communication obtenue par le combiné d'un usager ne puisse être demandée que par l'usager et soit facturée ultérieurement à l'usager d'une manière analogue à une communication téléphonique obtenue par un poste téléphonique d'abonné classique.

A ces fins, un poste téléphonique à liaison infrarouge est tel que défini et caractérisé dans la revendication 1.

Le module fixe est utilisable en général par tous les usagers munis d'un combiné selon l'invention. Le module fixe ne comporte aucune pièce mécanique en mouvement et est incorporé par exemple dans le plafond de la cabine publique, ce qui le rend pratiquement inaccessible à toute personne malintentionnée. Les principes élémentaires d'hygiène sont également assurés puisque chaque usager ne manipule que son propre combiné.

Selon l'invention à chaque combiné et donc à chaque usager est attribué un numéro personnel qui est mémorisé dans le combiné. Avant la prise de la ligne téléphonique et l'établissement d'une communication téléphonique, l'usager doit composer le numéro personnel au moyen du clavier inclus dans le combiné. Le numéro personnel composé est comparé à celui mémorisé, et seulement lorsque ces numéros sont égaux, l'usager peut procéder à l'établissement d'une communication. Ceci évite l'utilisation du combiné par une personne autre que l'usager et également l'affectation du coût d'une communication au compte d'un autre usager. Le changement du numéro personnel ne peut être réalisé que par l'Administration des Postes et Télécommunications fournissant les combinés.

Un autre problème résolu par l'invention est la gestion centrale et instantanée de la taxation des cabines téléphoniques. Dès que le numéro personnel est validé, le module fixe enregistre celui-ci et mémorise le compte de taxes pour la communication demandée. Après libération de la ligne, le module fixe reprend la ligne téléphonique pour retransmettre vers un organe éloigné de gestion de taxation, à travers le réseau téléphonique commuté, notamment le numéro personnel et le compte de taxes en vue d'établir ultérieurement la facture de l'usager. Ainsi, aucune gestion de relevé de caisses de monnaie ou de vente de cartes n'est nécessaire. La vente ou la location ainsi que la vérification du bon fonctionnement de combiné sont assurées directement par l'Administration. A cet égard, afin de limiter le nombre d'usagers ne réglant pas leur facture, le combiné peut comprendre une mémoire morte du compte de taxes cumulées qui ne peut être supérieur à un entier maximum prédéterminé. La mémoire morte est inaccessible à l'usager. Lorsque le compte de taxes cumulées atteint ce maximum, le combiné ne peut plus être utilisé et l'usager devra recourir à un service spécial de l'Administration qui remettra à zéro la mémoire du compte de taxes cumulées après avoir vérifié que l'usager n'est pas débiteur.

Selon un autre aspect de l'invention, dès que les moyens de décrochage du combiné sont excités, le combiné émet vers le module fixe à travers la liaison infrarouge un mot dit secret qui est validé par le module fixe avant la composition du numéro personnel. Ceci évite notamment l'utilisation de tout autre dispositif à infrarouge à la place du combiné pour obtenir une communication.

L'invention prévoit également divers moyens pour empêcher la prise de la ligne téléphonique, l'établissement d'une communication téléphonique et une taxation erronée lors notamment d'une occulation volontaire des moyens d'émission à infrarouge du combiné.

D'autres avantages et caractéristiques de l'invention apparaîtront plus clairement à la lecture de la description suivante de plusieurs modes de réalisation en référence aux dessins annexés correspondants dans lesquels:

—la Fig. 1 est un schéma général du poste téléphonique selon l'invention;

—la Fig. 2 est un bloc-diagramme simplifié du module fixe;

—la Fig. 3 un bloc-diagramme simplifié du combiné;

—les Figs. 4A et 4B sont des vues de côté et de face du boîtier ouvert du combiné; et

—la Fig. 5 est une vue schématique en perspective d'une cabine téléphonique publique selon l'invention.

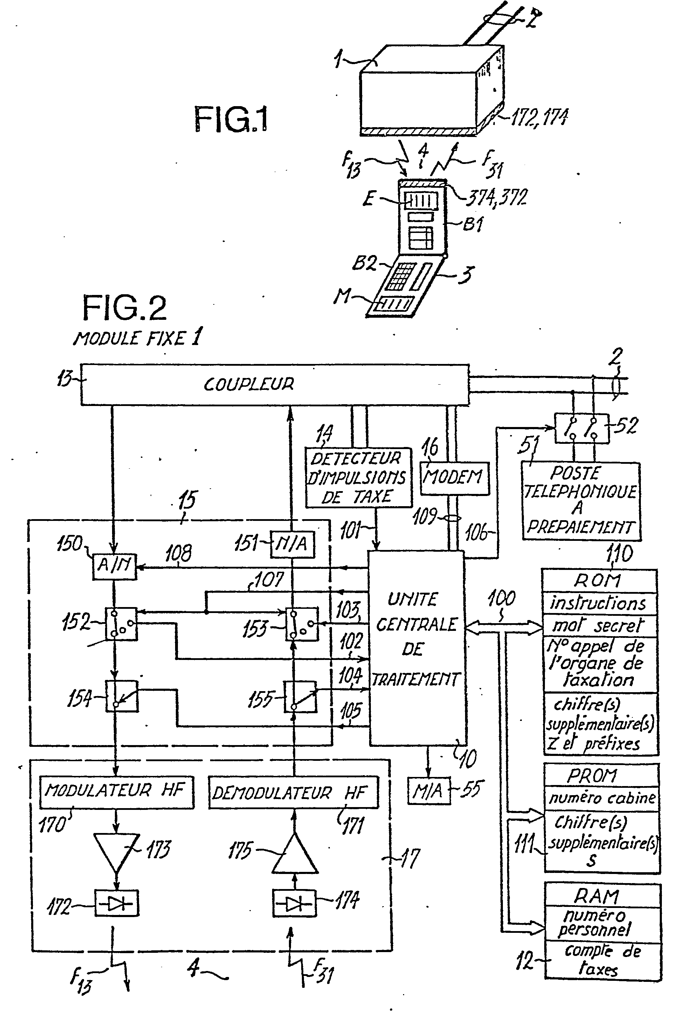

Comme montré à la Fig. 1, un poste téléphonique selon l'invention comprend un module fixe 1 qui est rélié à une ligne téléphonique d'abonné à deux fils 2, et un module mobile faisant office de combiné sans fil 3 qui est relié au module fixe 1 par une liaison infrarouge 4.

On décrit d'abord un premier mode de réalisation du poste téléphonique qui est destiné à une cabine téléphonique publique. On rappelle qu'on poste téléphonique public se différencie d'un poste téléphonique dit d'abonné, essentiellement par son accessibilité à de nombreux usagers et éventuellement par l'impossibilité d'obtenir des communications d'arrivée provenant d'un abonné distant à travers le réseau commuté.

En se référant à la Fig. 2, la module fixe 1 pour cabine téléphnonique publique est organisé autour d'une unité centrale de traitement (CPU) 10, sous la forme d'un microprocesseur. L'unité centrale 10 est reliée d'une manière classique à travers un pluribus 100 à une mémoire morte ROM 110, à une mémoire morte programmable PROM 111 et à une mémoire vive RAM 12. Le pluribus 100 est bidirectionnel et convoie les adresses, les données et les commandes entre mémoires et l'unité centrale 10. La mémoire morte 110 contient les instructions pour le déroulement du programme d'une communication téléphonique, ici de départ, entre le poste téléphonique de la cabine et un poste téléphonique éloigné ainsi qu'entre le poste téléphonique de la cabine et un organe éloigné de gestion de taxation à travers le réseau téléphonique commuté. La mémoire morte 110 contient également un mot secret, le numéro d'appel de l'organe de gestion et des numéros supplémentaires Z définissant des zones de taxation prédéterminées ainsi que des préfixes de numéro d'appel correspondant à ces zones de taxation. La mémoire morte programmable 110 contient un numéro assigné à la cabine et un chiffre supplémentaire dit de service S. La mémoire vive 12 mémorise pour chaque communication téléphonique le numéro personnel de l'usager ayant obtenu la communication et le compte de taxes cumulés au fur et à mesure du déroulement de la communication.

Du côté de la ligne téléphonique 2, le module fixe 1 contient un coupleur 13 qui couple la ligne téléphonique 2 avec un détecteur des impulsions de taxe 14, une interface analogique et numérique 15 et un modem 16.

Le détecteur 14 détecte les impulsions de taxe transmises par le central de rattachement à travers la ligne 2 pendant la durée de conversion de la communication. On rappelle que les impulsions de taxe peuvent être transmises sous la forme d'impulsions modulant une fréquence porteuse, typiquement de 12 kHz. L'intervalle entre deux impulsions de taxe est égal au palier de taxe, ou dit taxe de base, et dépend du préfixe du numéro d'appel, c'est-à-dire de la distance entre l'usager demandeur et l'abonné demandé pour une communication taxée à la durée. Le détecteur 14 démodule les impulsions de taxe détectées et les convertit en des impulsions logiques qui sont fournies à l'unité centrale 10 via un fil 101.

L'interface 15 comprend un convertisseur analogique-numérique 150 et un convertisseur numérique-analogique 151. Le convertisseur 150 filtre dans la bande audio à 4 kHz le signal à basse fréquence provenant du central téléphonique de rattachement, conveyé par la ligne 2 et traversant le coupleur 13, échantillonne le signal filtré à la fréquence de 8 kHz et code les échantillons en des mots MIC à 8 bits par exemple. Le signal numérique sortant du convertisseur 150 est appliqué sélectivement soit à travers un commutateur à trois positions 152 et un circuit d'aiguillage 154 à l'entrée d'un modulateur à haute fréquence 170, soit à travers le commutateur 152 à une entrée 102 de l'unité centrale 10. Le convertisseur 151 effectue l'opération inverse de celle du convertisseur 150. Il reçoit sélectivement soit à travers un second circuit d'aiguillage 155 et un second commutateur à trois positions 153 le signal numérique sortant d'un démodulateur à haute fréquence 171, soit à travers le commutateur 153, le signal numérique délivré par une sortie 103 de l'unité centrale 10. Dans le convertisseur 151, le signal numérique est ensuite décodé et filtré passe-bas en un signal analogique à basse fréquence traversant le coupleur 13 et convoyé par la ligne 2 vers le central téléphonique de rattachement. L'interface 15 et notamment les commutateurs 152 et 153 permettent ainsi d'échanger les signaux à basse fréquence propres à une communication téléphonique, soit entre la ligne 2 et le combiné 3 qui est raccordé au modem à haute fréquence 170—171 à travers la liaison infrarouge 4, soit entre la ligne 2 et l'unité centrale 10 pour l'établissement et la rupture d'une communication avec l'organe éloigné de gestion de taxation.

Le modem 16 est du type à modulation série bivalente, obtenue par déplacement de fréquence. Il permet d'échanger des informations entre des bornes d'entrée et de sortie numérique 109 de l'unité centrale 10 et l'organe éloigné de gestion de taxation à travers le coupleur 13, la ligne 2 et le réseau commuté. Pour chaque direction de transmission, est assignée une fréquence basse respective avec une excursion en fréquence permettant de distinguer les deux états binaires.

Le module fixe 1 peut être alimenté ou par une batterie rechargeable convenable, on par le secteur électrique, ou par la batterie du central téléphonique de rattachement à travers la ligne 2.

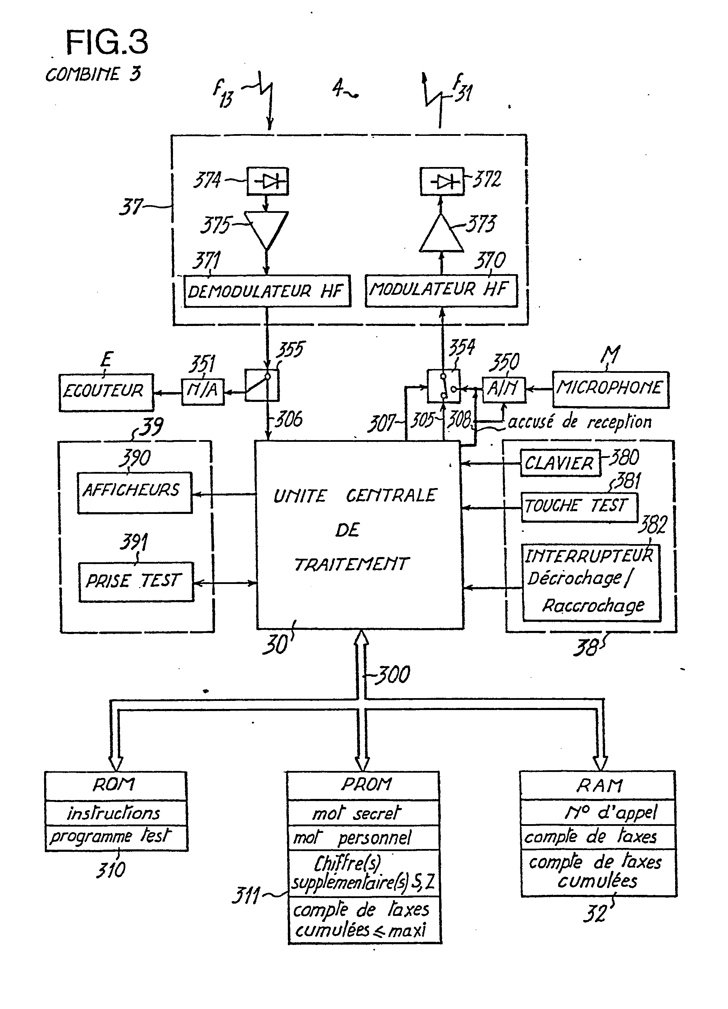

Comme montré aux Figs. 2 et 3, la liaison infrarouge bidirectionnelle 4 se compose de deux canaux unidirectionnels qui sont affectés chacun à une direction de transmission et à une sous-porteuse à haute fréquence respective $f_{13}$, $f_{31}$.

Suivant la direction de transmission du module fixe 1 vers le combiné 3, la fréquence $f_{13}$ de la sous-porteuse respective est égale par exemple à 80 kHz. Cette sousporteuse est modulée dans le modulateur 170 par les signaux numériques délivrés par le convertisseur analogique-numérique 150 à travers le commutateur 152 et le circuit d'aiguillage 154, et délivrés par une sortie mumérique 105 de l'unité centrale 10 à travers le circuit d'aiguillage 154. Dans un circuit d'émission et de réception infrarouge 17 du module fixe 1, le modulateur 170 délivre les signaux modulés à haute-fréquence $f_{13}$ à un transducteur électro-optique 172 à travers un amplificateur de puissance 173. Le signal modulé à haute fréquence $f_{13}$ est reçu par le démodulateur à haute fréquence 371 d'un circuit d'émission et de réception infrarouge 37 inclus dans le combiné 3 à travers un transducteur opto-électronique 374 et un amplificateur de puissance 375. Dans le combiné 3, la sortie du démodulateur 371 est reliée, à travers un circuit d'aiguillage 355, à un convertisseur numérique-analogique 351 qui délivre un signal à audio-fréquences à un écouteur de préférence piézoélectrique E du combiné 3 pendant la phase de conversion d'une communication téléphonique, et à une entrée numérique 306 d'une unité centrale de traitement (CPU) 30 du combiné 3 qui reçoit notamment des signaux numériques protocolaires préalablement à la prise de la ligne téléphonique 2 par le module fixe 1 et des signaux numériques propres à l'établissement d'une communication sur la ligne prise 2.

Suivant l'autre direction de transmission de la liaison infrarouge 4, du combiné 3 vers le module fixe 1, la fréquence $f_{31}$ de la sous-porteuse respective est par exemple égale à 100 kHz. Cette sous-porteuse est modulée dans un modulateur à haute fréquence 370 du circuit 37 soit par un signal numérique qui est délivré à travers un commutateur à deux positions 354 par un convertisseur analogique-numérique 350 recevant le signal à audiofréquences transmis par le microphone M de préférence piézoélectrique du combiné 3 pendant la phase de conversation d'une communication téléphonique, soit par des signaux numériques qui sont délivrés par une sortie numérique 305 de l'unité centrale de traitement 30 du combiné 3 préalablement à la prise de la ligne 2 et pendant l'établissement d'une communication téléphonique. Dans le circuit d'émission et de réception 37, le modulateur 370 délivre les signaux modulés à haute fréquence $f_{31}$ à un transducteur électro-optique 372 à travers un amplificateur de puissance 373. Puis les signaux émis à travers la liaison infrarouge 4 par la transducteur 372 sont captés dans le circuit d'émission et de réception 17 du module fixe 1 par un transducteur opto-électronique 174 et sont démodulés par le démodulateur à haute fréquence 171 dont l'entrée est reliée au transducteur 174 à travers un amplificateur de puissance 175. Les signaux numériques démodulés sortant du démodulateur 171 sont ensuite fournis à l'entrée 104 de l'unité 10 et à une entrée du commutateur 153 via le second circuit d'aiguillage 155.

On notera que les circuits 17 et 37 font appel à des circuits 170 à 175 et 370 à 375 qui sont de préférence identiques. Les transducteurs électro-optiques 172 et 372 peuvent comprendre chacun un ou plusieurs éléments photoémissifs tels que diode laser ou diode électroluminescente LED. Les transducteurs opto-électroniques 174 et 374 peuvent comprendre chacun un ou plusieurs éléments photoréceptifs tels que photodiode ou phototransistor.

Comme montré à la Fig. 3, le combiné 3 est également organisé autour d'un microprocesseur qui forme l'unité centrale de traitement 30. Cette unité permet d'échanger des signaux numériques avec l'unité 10 du module fixe 1 en vue de l'ètablissement d'une communication, c'est-à-dire de la prise de la ligne 2 par l'usager possédant un combiné tel que 3. L'unité 30 permet notamment de gérer les informations données par l'usager et les impulsions de taxe d'une communication.

L'unité 30 est reliée à trois mémoires 310, 311 et 32 à travers un pluribus d'adresses, de données et de commandes 300. La mémoire 310 est une mémoire morte ROM et contient les instructions de divers programmes de gestion et d'un programme de test. La mémoire 311 est une mémoire morte programmable PROM et contient le mot secret, le numéro personnel et des chiffres supplémentaires S et Z associés au numéro personnel, ainsi que le nombre de taxes cumulées pendant toutes les communications demandées par le combiné. La mémoire 32 est une mémoire vive RAM et contient le compte de taxes pour une communication téléphonique et le compte de taxes cumulées de communications successives, ainsi que des données fournies par l'usager, telles que des numéros d'appel de correspondants déterminés. Seul le contenu de la mémoire RAM 32 est accessible par l'usager.

Le combiné 3 comporte également une interface d'entrée 38 pour la commande de l'unité 30 par l'usager et une interface de sortie 39 notamment pour la visualisation de données délivrées par l'unité 30.

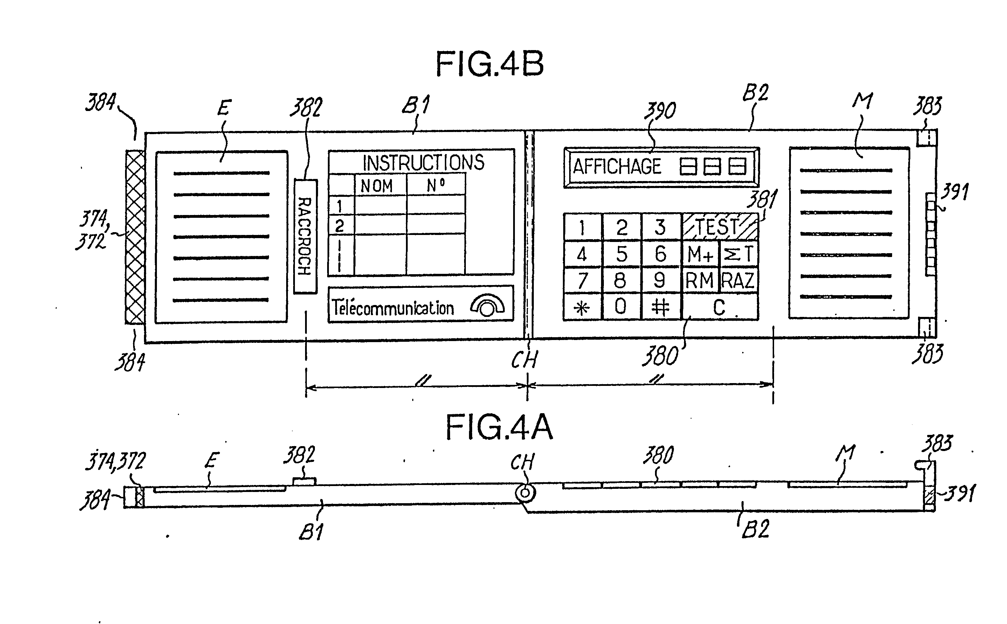

L'interface 38 comprend un clavier alphanumérique 380 qui, comme montré à la Fig. 4B, comporte les dix touches de numérotation 0 à 9 pour la composition d'un numéro d'appel de correspondant et les deux touches supplémentaires X et H d'une manière analogue au clavier de numérotation d'un poste téléphonique classique, et six autres touches supplémentaires, de fonction M+, RM, $\Sigma$T, RAZ, C et TEST. L'enfoncement de la touche M+ suivi par ceux d'une touche de numérotation particulière et des touches de numérotation correspondant à la composition d'un numéro d'appel commande l'effacement d'un numéro d'appel précédemment mémorisé et la mémorisation du numéro d'appel composé dans une cellule de la mémoire RAM 32 correspondant au numéro de la touche particulière et l'affichage de ce numéro d'appel sur une barrette d'afficheurs de préférence à cristaux liquides incluse dans l'interface de sortie 39. L'enfoncement de la touche RM suivi par celui d'une touche de numérotation rappelle le numéro d'appel de la cellule correspondante de la mémoire RAM 32 dans l'unité 30 et l'affichage de ce numéro d'appel sur la barrette d'afficheurs 390. Un unique enfoncement de la touche ΣT permet d'afficher le compte de taxes d'une communication téléphonique en cours ou de la dernière communication, par lecture de la cellule correspondante de la mémoire RAM 32 sous la commande de l'unité 30. Deux enfoncements de la touche ΣT permet de lire une autre cellule de la mémoire RAM 32 et d'afficher le compte de taxes cumulées pour toutes les communications établies depuis la dernière remise à zéro. La touche RAZ commnde la remise à zéro de la cellule de la mémoire 32 mémorisant le compte de taxes cumulés. La touche C correspond à la fonction "CORRECTION" en français—ou "CLEAR" en anglais—et permet d'annuler le dernier chiffre inscrit ou la dernière fonction demandée. Dans le cas d'une erreur de frappe dans un numéro d'appel, la manoeuvre de la touche C ordonne l'effacement du numéro d'appel complet. La touche "TEST" 381 permet à l'usager de vérifier le bon fonctionnement du combiné.

L'interface 38 du combiné 3 comporte également un interrupteur à touche 382 dont l'infoncement simule avant toute communication le décrochage d'un combiné classique afin que les unités 30 et 10 soient mises en relation et procèdent à un échange protocolaire de signaux avant la prise de la ligne 2. Après la phase de conversation, l'enfoncement de la touche 382 simule le raccrochage d'un combiné classique afin que l'unité 30 ordonne à l'unité 10 la libération de la ligne 2.

L'ensemble des circuits du combiné 3 sont alimentés par une source d'alimentation autonome convenable, par exemple une batterie de piles au mercure ou une batterie rechargeable.

Selon le mode de réalisation illustré aux Figs. 4A et 4B, le combiné 3 est conformé en deux demi-boîtiers rectangulaires très minces B1 et B2 dont les grandes faces ont pratiquement des dimensions indentiques. Les circuits électroniques composant le combiné sont de préférence des circuits à très haute densité d'intégration (LSI) et sont réparties convenablement dans les deux demi-boîtiers afin que les epaiseurs des demi-boîiers B1 et B2 soient de l'ordre de 5 mm et 7 mm respectivement. Deux chants transversaux des demi-boîtiers B1 et B2 sont solidaires au moyen d'une charnière souple CH à travers laquelle passent les conducteurs imprimés souples de liaison entre les circuits inclus dans les demi-boîtiers. Le rabattement à 180° du demi-boîtier B1 sur le demi-boîtier B2 autour de la charnière CH forme ainsi un boîtier compact parallélépipédique ayant des dimensions analogues à une calculatrice de poche. Typiquement le combiné à l'état fermé a une longueur de 100 mm, une largeur de 50 mm et une épaisseur de 12 mm.

Comme on le voit dans la Fig. 4B, la face ajourée de l'écourteur E et la touche de l'interrupteur 382 apparaissent sur la face interne du demi-boîtier B1. Un emplacement est également réservé sur cette face pour que l'usager inscrive notamment les noms patronymiques de ses correspondants en face des numéros des cellules de la mémoire RAM 32 ayant mémorisé leur numéro d'appel. La touche de l'interrupteur 382 est saillante afin qu'elle soit maintenue enfoncée par contact avec une portion de la face interne du demi-boîtier B2 lorsque le boîtier est fermé, en vue de simuler le raccrochage. La portion de la face interne du demi-boîtier B2 est à l'extérieur de la surface occupée par le clavier 380 afin que la touche 382 n'actionne pas les touches du clavier. Le chant transversal supérieur du demi-boîtier B1 à l'opposé de la charnière CH contient les transducteurs infrarouges 374 et 372.

Sur la face interne du demi-boîtier inférieur B2 apparaît après la charnière CH, le clavier 380 avec les touches de numérotation et de fonction. Ces touches sont à microcontact et à effleurement. Le barrette à afficheurs à cristaux liquides 390 est juxtaposés au clavier. En dessous du clavier et des afficheurs est prévue la face ajourée du microphone piézoélectrique M. Le chant transversal inférieur du demi-boîtier B2 à l'opposé de la charnière CH contient une prise TEST 391.

Des moyens de verrouillage maintiennent le demi-boîtier B1 rabattu sur le demi-boîtier B2 et déconnectent ainsi la source d'alimentation antonome du combiné et les circuits lorsque le combiné est fermé. Les moyens de verrouillage peuvent être deux pattes besculantes 383 qui sont logées dans les deux coins du chant transversal libre du demi-boîtier B2 et qui coopérant avec deux encoches 384 prévues aux deux coins du chant libre de l'autre demi-boîtier B1. Selon une autre variante, les pattes 383 peuvent être remplacées par deux petits aimants permanents qui viennent au contact de deux petites pièces métalliques logées dans les encoches 384 respectivement.

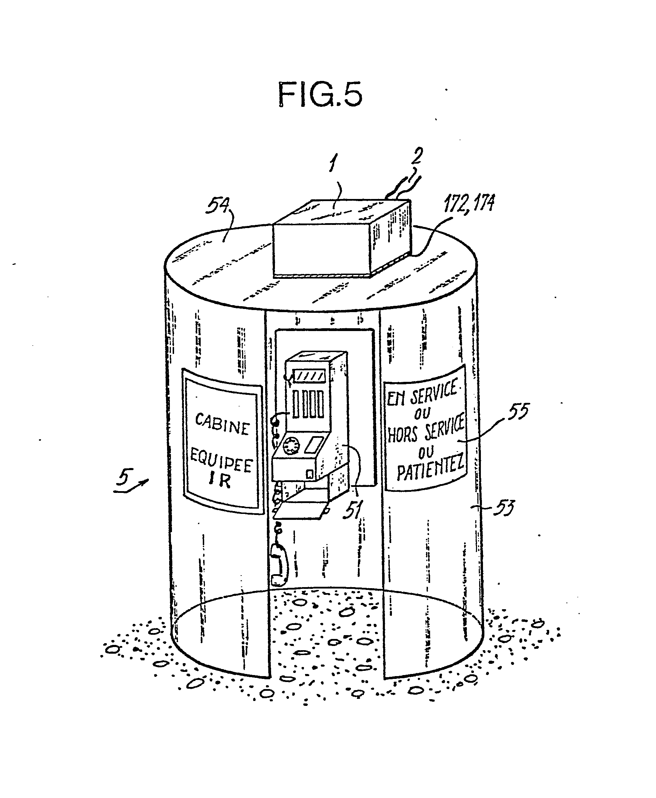

En référence à la Fig. 5, ou retrouve une cabine téléphonique 5 connues comprenant un poste téléphonique classique à prépaiement par pièces ou par carte magnétique 51. Comme montré schématiquement à la Fig. 2, le poste 51 est relié à la ligne téléphonique 2 à travers un double commutateur 52 qui est fermé sous la commande de l'unité 10 via un fil 106 lorsqu'aucune communication n'est demandée ou est en cours par l'intermédiaire du combiné.

L'enceinte de la cabine téléphonique est composée d'une paroi verticale à porte rabattable, ici cylindrique, 53 qui est opaque au rayonnement infrarouge provenant de l'extérieur et éventuellement d'autres telles cabines adjacentes. La paroi supérieure 54 de la cabine formant plafond est en matière très solide, telle que l'acier. Dans la face interne du plafond 54 est prévu un évidement pour l'encastrement uniquement des transducteurs infrarouges 172 et 174 du module fixe 1. Sur la face externe du plafond 54 peut être fixé un boîtier contenant le module 1 à l'exception des transducteurs 172 et 174. Selon une autre variante, lorsqu'aucun emplacement suffisant et accessible ne peut être prévu au dessus du plafond 54, les transducteurs 172 et 174 sont raccordés chacun à une ou plusieurs fibres optiques dont les autres extrémités traversent le centre de plafond 54 et sont fixées pratiquement tangentiellement à la face interne du plafond.

Comme montré aux Figs. 2 et 5, l'unité centrale 10 du module fixe 1 est reliée à un voyant 55 dont l'éclairement permanent permet à l'usager de constater le bon fonctionnement du module 1. L'extinction du voyant 55 permet à l'agent chargé de la maintenance de la cabine de constater assurément le dérangement du module 1. Le voyant 55 est encastré dans la paroi 53 et visible de l'extérieur de la cabine.

Selon une autre variante, le voyant 55 peut être remplacé par un afficheur ayant trois états de basculement qui sont commandés par l'unité 10 du module fixe 1. Un premier état signifie que la carbine est "EN SERVICE" et non occupée par un usager, un second état signifie la mise "HORS SERVICE" de la cabine et un troisième état invite les usagers à "PATIENTEZ" quelques instants suite à l'occupation de la cabine par un usager ou à l'occupation de la ligne 2 par une communication entre le module fixe 1 et l'organe éloigné de gestion de taxation. Seulement l'un des trois états est visible de l'extérieur de la cabine 5.

On décrit maintenant le processus d'établissement d'une communication téléphonique demandée par un usager doté d'un combiné ouvert 3 dont les transducteurs 372 et 374 sont pointés vers les transducteurs 174 et 172 dans le plafond 54 de la cabine. Le voyant 55 est éclairé et signale ainsi le bon fonctionnement du module fixe 1 qui est en état de veille avec une consommation réduite. Dans le module fixe, l'état du premier commutateur 152 est tel qu'il relie la sortie du convertisseur 150 à l'entrée 102 de l'unité centrale 10, et l'état du second commutateur 153 est tel qu'il relie la sortie 103 de l'unité centrale 10 à l'entrée du convertisseur 151. Dans le combiné, l'état du commutateur 354 est tel qu'il relie la sortie 305 de l'unité centrale 30 à l'entrée du modulateur 370.

L'usager frappe la touche de l'interrupteur 382, ce qui se traduit par un échange protocolaire entre les unités 30 et 10 avant toute prise de la ligne téléphonique 2. L'unité 30 lit le mot secret dans la mémoire PROM 311 et le transmet, vis le fil 305 et le canal à le fréquence $f_{31}$ de la liaison infrarouge 4 et notamment le modulateur 370 et le démodulateur 171, à l'entrée 104 de l'unité centrale de traitement 10 du module fixe 1. L'unité centrale 10 valide le mot secret reçu par comparaison avec celui lu dans la mémoire 110 et se prépare à dialoguer avec l'unité 30. Le module fixe 1 passe de l'état de veille à l'état de marche pour lequel tous les circuits du module fixe sont sous tension. Le double commutateur 52 est ouvert par l'unité 10 via le fil 106.

Si l'unité 10 ne valide pas le mot secret, ce qui peut être provoqué par une occultation momentanée du transducteur électro-optique 372 du combiné 3, l'unité 10 reémet après une temporisation prédéterminée un message vers le combiné 3 qui est traduit par l'unité 30 en un affichage de "REDECROCHER" par les afficheurs 390. L'usager doit à nonveau appuyer sur le touche 382 afin de "débloquer" le clavier 380.

A la suite de l'émission du mot secret par l'unité 30 du combiné 3, des chiffres supplémentaires — ou d'une manière générale, des nombres supplémentaires-, par exemple au nombre de deux S et Z, sont lus dans la mémoire PROM 311 par l'unité 30 et sont également transmis à l'unité 10 du module fixe 1 via le canal infrarouge $f_{31}$.

Le premier chiffre supplémentaire S est attribué à tous les combinés qui possèdent d'une manière générale un groupe déterminé d'usagers. Par exemple, ce groupe d'usagers appartient à une administration ou un service public, tel que EDF, PTT ou RATP en France, pour lequel des cabines téléphoniques lui sont réservées et contiennent en mémoire PROM 111 de leur module fixe 1 le chiffre S. L'unité 10 d'une telle cabine valide également ce chiffre S par comparaison, ce qui restreint ainsi l'usage d'une telle cabine aux usagers possédant un combiné avec le chiffre S en mémoire 311. Si les chiffres supplémentaires S du combiné et du module fixe sont différents, l'unité 10 empêche la prise de la ligne 2 et ordonne à l'unité 30 d'afficher sur les afficheurs 390 "INACCESSIBLE". L'usager devra alors changer de cabine.

Le second chiffre supplémentaire Z désigne une zone géographique de taxation nationale, par exemple une zone urbaine et interurbaine, ou internationale, par exemple l'ensemble des pays limitrophes du pays de l'usager. Ceci permet ainsi à une entreprise possédant un ensemble de combinés de ne laisser l'accès à ses employés tels que des représentants qu'à des communications téléphoniques pour l'intérieur de la zone de taxation définie par le chiffre Z. Ce chiffre Z est automatiquement transmis à l'unité 10 du module fixe dont la mémoire ROM 110 contient tous les chiffres Z en correspondance avec les préfixes de numéros d'appel assignés à la zone de taxation respective. Ainsi, après validation du numéro d'appel de l'abonné demandé composé au clavier par l'usager comme ou le verra dans la suite, l'unité 10 recherche dans la mémoire 110 si le préfixe du numéro d'appel est égal à l'un des préfixes correspondant au chiffre Z. Si ce n'est pas le cas, l'usager n'a pas accès à la communication demandée. L'unité 10 simule de raccrochage en commandant le basculement des commuta-

11 **0 115 240** 12

teurs 152 et 153 via le fil 107, ce qui libère la ligne 2, et ordonne à l'unité 30 d'afficher sur les afficheurs 390 "REDECROCHER".

Pour un abonné normal, les chiffres S et Z sont par exemple égal à zéro et la sélection précédente de zones de taxation n'est pas effectuée; un abonné normal n'a pas accès aux cabines pour des services particuliers définis par les chiffres S.

A la suite de l'enfoncement de la touche 382, et après les émissions brèves du mot secret et des chiffres supplémentaires S et Z, l'usager compose au moyen du clavier 380 le numéro personnel qui est uniquement connu par l'usager et attribué à son combiné. Après codage convenable dans un codeur du clavier, le numéro personnel composé est enregistré dans l'unité 30 et est comparé avec le numéro personnel mémorisé qui est lu dans la mémoire PROM 311 par l'unité 30. Cette comparaison évite l'emploi du combiné par toute personne ignorant le numéro personnel. Si les deux numéros sont identiques, l'unité centrale délivre successivement les mots représentatifs des chiffres du numéro personnel sur la sortie 305. Cependant, l'émission de chaque chiffre est suivie d'un mot respectif dit de validation qui est calculé par l'unité 30 suivant un algorithme prédéterminé. Cet algorithme peut consister par exemple en une combinaison d'opérations logiques effectuées sur le mot représentatif du chiffre et sur le mot secret ou en une combinaison d'opérations logiques simples, telles que division et multiplication binaires, effectuées sur le mot représentatif du chiffre et sur des nombres entiers prédéterminés. Les instructions de cet algorithme sont mémorisées dans la mémoire morte 310 du combiné et celles de l'algorithme réciproque sout mémorisées dans la mémoire morte 110 du module fixe.

A la réception de chaque chiffre du numéro personnel suivi du mot de validation respectif, l'unité 10 traite le mot de validation selon l'algorithme réciproque afin de vérifier que celui-ci corresponde bien au chiffre reçu de numéro personnel composé.

La transmission d'un mot de validation après chaque chiffre du numéro personnel permet de remédier à d'éventuelles fraudes, par exemple, en occultant momentanément le transducteur électro-optique infrarouge 372 du combiné en vue d'affecter les taxes de communication à un autre usager, ou en reprenant la communication en cours par le combiné d'un second usager afin d'attribuer toutes les taxes au premier usager. Dans le cas où au moins l'un des chiffres du numéro personnel n'est pas validé par l'unité 10 du module fixe 1, d'une part le noméro personnel n'est pas mémorisé dans la mémoire RAM 12 et d'autre part, l'unité 10 réémet un message qui, traduit par l'unité 30, signale sur les afficheurs 390 "RENUMEROTER", ce qui signifie que le module fixe 1 ne peut établir la communication.

Après validation du numéro personnel, l'unité 10 commande la mémorisation de celui-ci dans la mémoire RAM 12. L'unité 10 commande également le basculement des commutateurs 152 et 153, via le fil 107 (Fig. 2), ce qui simule le décrochage pour la prise de la ligne téléphonique 2 d'une manière analogue au basculement des crochets commutateurs dans on poste téléphonique classique. Le combiné 3 est donc relié à la ligne téléphonique 2 à travers la liaison infrarouge 4, le circuit 17, l'interface 15 et le coupleur 13.

La tonalité d'invitation à numéroter est détectée par l'unité 30 du combiné 3 qui commande par exemple l'affichage d'un symbole ou mot particulier tel que "NUMEROTER" sur les afficheurs 390, ou le clignotement des chiffres du numéro personnel composé précédemment. Ceci invite l'usager à procéder classiquement à la numérotation du numéro d'appel de l'abonné demandé soit au moyen des touches de numérotation du clavier 380, soit au moyen de la touche de fonction RM et de la touche du chiffre correspondant au numéro d'appel déjà mémorisé. Le numéro d'appel est affiché par les afficheurs 390. Comme déjà dit, l'unité 10 détecte le numéro d'appel afin de comparer éventuellement son préfixe aux préfixes dans la mémoire ROM 110 correspondant au chiffre supplémentaire Z déjà reçu lorsque celui-ci est différent de zéro. Puis la tonalité de retour d'appel sur le fil 306 est détectée par l'unité 30 du combiné qui commande le basculement du commutateur 354 via un fil 307 afin de relier le microphone M à l'entrée du modulateur à haute fréquence 370 à travers le convertisseur 350.

Selon une autre variante, le commutateur électronique 354 peut être remplacé par un circuit d'aiguillage et le fil de commande 307 peut servir à bloquer le convertisseur analogique-numérique 350 à l'état "O" pendant les phases précédentes relatives aux échanges protocolaires entre les unités 30 et 10 et à l'établissement de la communication.

Pendant la phase de conversation, les impulsions logiques sur le fil 101 représentatives des impulsions de taxe détectées par le détecteur 14 sont chacune converties en un mot prédéterminé de taxe par l'unité 10. Ce mot prédéterminé est différent des mots codés fournis par la sortie du convertisseur analogique-numérique 150. Chaque mot prédéterminé de taxe est inséré, via le fil de sortie 105 et le circuit d'aiguillage 154, par l'unité 10 et un fil de commande 108 (Fig. 2), entre deux mots délivrés par le convertisseur 150. Les mots prédéterminés de taxation sont ainsi convoyés par le canal à la fréquence $f_{13}$ de la liaison infrarouge 4 et sont détectés par l'unité 30 via le circuit d'aiguillage 355 et l'entrée 306. En réponse à une impulsion de taxe, l'unité 10 du module fixe incrémente d'une unité le compte de taxes attribué au numéro personnel dans la mémoire RAM 12, et l'unité 30 du combiné incrémente d'une unité le compte de taxes de la communication en cours et le compte de taxes cumulées dans le mémoire RAM 32 ainsi que le compte de taxes dans la mémoire PROM 311. L'unité 30 peut être prévue pour commander l'affichage du compte de taxes dans les afficheurs 390 pendant la communication téléphonique.

Selon une autre variante, au lieu que les impulsions de taxe soient transmises à travers le même canal $f_{13}$ entre des mots d'échantillon de parole, le module fixe 1 et le combiné 3 comprennent respectivement un circuit d'émission à infrarouge, analogue au circuit 170—173—172, et un circuit de réception à infrarouge, analogue au circuit 374—375—371 qui sont affectés à un canal de transmission ayant une fréquence différente de $f_{13}$. Le second canal est propre à transmettre les mots représentatifs des impulsions de taxe entre l'unité 10 du module fixe et l'unité 30 du combiné. Cette variante permet d'émettre les mots représentatifs des impulsions de taxe en asynchronisme avec les mots d'échantillon de parole sur le canal $f_{13}$.

L'invention prévoit également des moyens pour détecter des fraudes relatives à la taxation. En effet, la réception des taxes par le combiné n'est pas destinée uniquement à informer l'usager du coût de la communication, mais sert également à compter toutes les taxes dont le nombre est enregistré dans la mémoire PROM 311 et peut faire foi en cas de contestation. Les fraudes peuvent consister à occulter brièvement le transducteur opto-électronique du combiné, tel que 374, en synchronisme avec la retransmission des mots de taxe. La détection des fraudes sur la taxation est fondée sur les critères suivants:

la communication téléphonique ne doit pas être coupée lorsqu'un mot de taxe n'est pas reçu par le combiné suite à une occulation involontaire par l'usager;

la communication téléphonique doit être coupée lorsqu'un premier nombre prédéterminé K3, par exemple égal à trois, de mots de taxe sont occultés pendant la phase de conversation, ou lorsqu'un second nombre prédéterminé K2, par exemple, égal à deux, de mots de taxe émis successivement par le module fixe sont occultés.

A chaque mot de taxe reçu, l'unité 30 réémet un mot particulier d'accusé de réception vers le module fixe. Le mot d'accusé de réception peut être émis soit via un bus 308 (Fig. 3) et un circuit d'aiguillage entre deux mots d'échantillon de parole dans le convertisseur analogique-numérique 350 et donc via le canal infrarouge $f_{31}$, soit à travers un circuit d'émission à infrarouge dans le combiné, analogue au circuit 370—373—372, et un circuit de réception à infrarouge dans le module fixe, analogue au circuit 174—175—171 qui sont affectés à un canal de transmission ayant une fréquence porteuse différente de $f_{31}$. Ces deux variantes correspondent respectivement aux deux variantes déjà envisagées pour la transmission des mots de taxe.

L'unité 10 du module fixe 1 accomplit les fonctions suivantes. A chaque impulsion de taxe délivrée par le détecteur 14 sur le fil 101, l'unité 10 incrémente d'une unité le compte de taxes dans lu mémoire RAM 12 et un premier compte. A chaque mot d'accusé de réception reçu et validé, qui est délivré par l'unité 30 du combiné 3, l'unité 10 remet à zéro le premier compte et incrémente d'une unité un second compte: le compte de taxe de la mémoire RAM 12 est comparé au second compte. Pour chaque impulsion de taxe reçue, dès que le premier compte est égal à K2 on dès que la différence entre le compte de taxe et le second compte est au moins égale à K3, l'unité 10 du module fixe 1 provoque la libération de la ligne 2 et donc le raccrochage, comme on le verra ci-après.

Le raccrochage par l'usager demandeur est obtenu par un nouvel enfoncement de la touche 382 soit directement par l'usager, soit par rabattement du demi-boîtier B2 contre le demi-boîtier B1, soit par occultation du faisceau infrarouge devant le transducteur 372 pendant une durée prédéterminée de quelques secondes. L'unité 30 du combiné commande le basculement du commutateur 354 via le fil 307 pour relier la sortie 305 à l'entrée du modulateur à haute fréquence 370, et délivre un mot particulier dit de raccrochage sur la sortie 305 vers l'entrée 104 de l'unité 10 via le canal à fréquence $f_{31}$ de la liaison infrarouge 4.

En réponse au mot de raccrochage, ou en réponse au premier compte égal à K2, ou en réponse au second compte ayant une différence de K3 avec le compte de taxes de la mémoire 12, l'unité 10 ouvre les commutateurs 152 et 153 via le fil 107 afin de simuler le raccrochage, puis bascule ces commutateurs afin de relier les conducteurs 102 et 103 à la ligne 2 à travers les convertisseurs 150 et 151 et le coupleur 13. L'unité centrale 10 joue alors le rôle d'un poste téléphonique de demandeur et appelle l'organe éloigné de gestion de taxation en composant le numéro d'appel de l'organe de taxation lu dans la mémoire ROM 110. Après la phase de numérotation et en réponse à la tonalité de retour d'appel, l'unité 10 communique avec l'organe de taxation par l'intermédiaire du modem 16. Après un échange de signaux protocolaires, l'unité 10 émet notamment le numéro de la cabine et le chiffre supplémentaire S qui sont lus dans la mémoire PROM 111, et le numéro personnel de l'usager de la dernière communication et le compte de taxes correspondant qui sont lus dans la mémoire RAM 12. L'organe de gestion additionne ce compte de taxes au compte affecté à l'usager en vue d'établir sa facture par exemple tous les deux mois. Le numéro personnel est en fait composé de deux parties. Une partie est attribuée au compte d'un groupe d'usagers tel qu'une entreprise, et la seconde partie est attribuée aux différents usagers de ce groupe. Le numéro de la cabine permet la gestion centralisée des cabines en vue d'établir des statistiques relatives à la taxation.

Après la communication avec l'organe de gestion, l'unité 10 reconnecte le poste téléphonique à prépaiement 51 à la ligne téléphonique 2 en fermant le double commutateur 52 via le fil 106. Puis l'unité 10 passe à l'état de veille.

La mémoire RAM 12 peut mémoriser plusieurs couples comprenant chacun un numéro personnel d'usager et un compte de taxes correspondant afin de conserver en mémoire ces données lorsque par exemple, l'organe de gestion de taxation est occupé et une autre communication est demandée par un autre usager. Dès que la ligne 2 est disponible, les numéros personnels et comptes de taxes correspondants mémorisés sont transmis automatiquement à l'organe de gestion de taxation.

L'unité 30 du combiné peut être prévue pour signaler à l'usager que son avoir en taxes est proche du maximum, par exemple, lorsque le compte dans la mémoire PROM 311 est égal au maximum moins dix taxes. Dans ce cas, les afficheurs 390 visualisent "RESTE 10 TAXES". Lorsque dans l'unité 30, la comparaison du compte de taxes dans la mémoire PROM 311 avec le compte maximum, par exemple égal à 500, 1000 ou 5000, -effectuée par l'unité 30 en réponse à chaque mot prédéterminé de taxe- indique l'égalité, les afficheurs 390 affichent en permanence "HORS SERVICE" et l'unité 30 procède automatiquement à la phase de raccrochage si une communication est en cours et interrompt les liaisons entre l'interface d'entrée 38 et l'unité 30.

La prise TEST 391 du combiné est connectable à un appareil d'essai n'appartenant pas à l'objet de l'invention. Cet appareil est destiné d'une part à remettre à zéro le compte de taxes de la mémoire PROM 311 du combiné et à débloquer la liaison entre l'interface d'entrée 38 et l'unité 30 sur présentation du combiné par l'usager à un service spécial de l'administration des télécommunications à tout instant et notamment lorsque les afficheurs 390 signalent "HORS SERVICE". D'autre part, l'appareil d'essai est destiné à vérifier le bon fonctionnement des circuits du combiné et notamment de l'alimentation autonome du combiné. Ces vérifications sont déchenchées automatiquement par un programme de test qui est mémorisé dans la mémoire ROM 310 et dont les résultats sont interprétés par l'appareil d'essai. Le programme de test est nettement plus complet que le programme de contrôle déclenché par l'usager au moyen de la touche TEST 381.

Selon une autre variante, le module fixe et le combiné forment un poste téléphonique installé dans les locaux d'un abonné. Les moyens de détection de taxes et de mémorisation de taxes peuvent être supprimés. Le poste téléphonique classique d'abonné remplace le poste 51 et est connecté directement à la ligne téléphonique 2 sans l'intermédiaire du double commutateur 52. La retransmission des comptes de taxes à un organe de gestion de taxation est supprimé. La réception de la tonalité d'appel suite à l'appel d'un abonné éloigné demandeur est signalé soit par la sonnerie du poste téléphonique classique, soit par une sonnerie incluse dans le module fixe 1 et commandée par l'unité 10, soit par une sonnerie incluse dans le combiné 3 et commandée par l'unité 30.

Bien que l'invention concerne principalement un poste téléphonique pour cabine publique, l'objet de l'invention concerne également un combiné selon l'invention et un module fixe selon l'invention considérés séparément.

Le combiné peut être introduit dans un véhicule, par exemple dans le tableau de bord d'une automobile. Dans ce cas, les transducteurs du combiné, tels que 372 et 374, sont intégrés à la carrosserie du véhicule, par exemple au niveau de l'aile avant droite. Des bornes téléphoniques équipées chacune d'un module fixe selon l'invention sont prévues le long des chaussées des voies routières. Un conducteur peut établir une communication téléphonique en arrêtant convenablement son véhicule devant une borne, sans sortir de son véhicule.

**Revendications**

1. Poste téléphonique à liaison infrarouge bidirectionnelle (4) entre combiné (3) et module fixe (1) relié à une ligne téléphonique d'abonné (2),

le module fixe (1) comprenant un convertisseur analogique-numérique (150) et un convertisseur numérique-analogique (151) couplés à la ligne téléphonique (2) ainsi que des moyens d'émission (170, 172) et de réception (174, 171) de signaux numériques respectivement entre lesdits convertisseurs et ladite liaison infrarouge,

et le combiné (3) comprenant des moyens d'émission (370, 372) et de réception (374, 371) de signaux numériques à travers ladite liaison infrarouge (4), un microphone (M), un convertisseur analogique-numérique (350) entre le microphone et les moyens d'émission du combiné, un écouteur (E), un convertisseur numérique analogique (351) entre les moyens de réception de combiné et l'écouteur, des moyens numériques de numérotation (380, 30) connectables aux moyens d'émission (370, 372) du combiné, et des moyens de simulation de décrochage et de raccrochage (382, 30) connectables aux moyens d'émission (370, 372) du combiné,

caractérisé en ce que le combiné (3) comprend des moyens (30, 311) pour valider un numéro personnel et confidentiel attribué au combiné (3), le numéro personnel étant composé par l'utilisateur a l'aide des moyens de numerotation (380) et transmis une fois validé à travers la liaison infrarouge (370, 372, 4, 174, 171) du combiné vers le module fixe (1) après l'excitation des moyens de simulation de décrochage (382, 30) et avant le prise de la ligne téléphonique (2), et des moyens de comptage de taxes (30, 32) pour incrémenter au fur et à mesure de la réception de mots numériques de taxe un compte de taxes de la communication en mémoire et pour et afficher sur des afficheurs (390) du combiné ledit compte de taxes de la communication memorisé,

et en ce que le module fixe (1) comprend des moyens (10, 12) pour mémoriser le numéro personnel transmis par le combiné (3), des moyens (14) pour détecter des impulsions de taxe convoyées sur la ligne téléphonique (2), des moyens de comptage des impulsions de taxe détectées (10, 12), des moyens (10, 154) pour retransmettre en réponse à chaque impulsion de taxe détectée un mot numérique de taxe à travers la liaison infrarouge (170, 172, 4, 374, 371) vers les moyens de comptage de taxes (30, 32, 390) du combiné, et des moyens (10, 16) couplés à la ligne téléphonique (2) pour retransmettre le numéro personnel et le compte de taxes mémorisés dans le module fixe (1) sur la ligne téléphonique après la rupture de la communication téléphonique par les moyens de simulation de raccrochage (382, 30) du combiné et lorsque l'organe de gestion est en état à réception.

2. Poste téléphonique conforme à la revendication 1, caractérisé en ce que les moyens pour valider le numéro personnel dans le combiné (3) comprennent une mémoire morte (311) de préférence programmable contenant le numéro personnel, des moyens (30) pour comparer le numéro personnel composé par les moyens de numérotation (380) et le numéro personnel mémorisé dans la mémoire morte (311), et des moyens (30) pour émettre à travers la liaison infrarouge (370, 372, 4, 174, 171) le numéro personnel mémorisé lorsque les numéros comparés sont égaux ou pour commander l'affichage d'un mot particulier (RENUMEROTER) dans les afficheurs (390) du combiné et empêcher la prise de la ligne téléphonique (2) lorsque les numéros comparés sont différents.

3. Poste téléphonique conforme à la revendication 2, caractérisé en ce que les moyens pour valider le numéro personnel dans le combiné (3) comprennent des moyens (30, 310) pour produire à la suite de chaque chiffre émis du mot personnel un mot respectif dit de validation selon un algorithme prédéterminé dépendant de préférence du chiffre émis, en vue d'émettre à la suite du chiffre émis, le mot de validation à travers la liaison infrarouge (370, 372, 4, 174, 171), et en ce que le module fixe (1) comprend des moyens (10, 110) pour valider chaque chiffre émis du numéro personnel en dépendance du mot de validation respectif en vue de mémoriser le numéro personnel et de prendre la ligne téléphonique (2) lorsque tous ses chiffres sont validés, ou en vue d'émettre à travers la liaison infrarouge (170, 172, 4, 374, 371) un message particulier dans le combiné (3) qui commande l'affichage d'un mot particulier (RENUMEROTER) dans les afficheurs (390) et en vue de ne pas prendre la ligne téléphonique lorsqu'au moins l'un des chiffres du numéro personnel n'est pas validé dans le module fixe (1).

4. Poste téléphonique conforme à l'une des revendications 1 à 3, caractérisé en ce que le combiné (3) comprend des moyens (30, 311) pour produire un mot dit secret à travers la liaison infrarouge (370, 372, 4, 174 171) en réponse à l'excitation des moyens de simulation de décrochage (382, 30) et en ce que le module fixe (1) comprend des moyens (10, 110) pour comparer le mot secret reçu avec un mot secret mémorisé afin d'émettre à travers la liaison infrarouge (170, 172, 4, 374, 371) un message particulier qui commande l'affichage d'un mot particulier (REDECROCHER) dans les afficheurs (390) du combiné et d'empêcher la prise de la ligne téléphonique (2) lorsque les mots secrets comparés sont différents.

5. Poste téléphonique conforme à l'une des revendications 1 à 4, caractérisé en ce que le combiné (3) et le module fixe (1) sont assignés à un groupe d'usagers désignés par un premier numéro supplémentaire (S), en ce que le combiné (3) comprend des moyens (30, 311) pour produire le premier mot supplémentaire (S) à travers la liaison infrarouge (370, 372, 4, 174, 171) avant la validation du numéro personnel dans le combiné, et en ce que le module fixe (1) comprend des moyens (10, 111) pour comparer le premier mot supplémentaire reçu avec un mot supplémentaire mémorisé afin d'émettre à travers la liaison infrarouge (170, 172, 4, 374, 371) un message particulier qui commande l'affichage d'un mot particulier (INACCESSIBLE) dans les afficheurs (390) du combiné, et d'empêcher la prise de la ligne téléphonique (2) lorsque les premiers mots supplémentaires comparés sont différents, ce qui signifie que le combiné n'est pas assigné au même groupe d'usagers que celui du module fixe, lesdits moyens (10, 16) pour retransmettre le numéro personnel et le compte de taxes retransmettant le premier mot supplémentaire si la communication a été établie.

6. Poste téléphonique conforme à l'une des revendications 1 à 5, caractérisée en ce que le combiné (3) comprend des moyens (30, 311) pour produire au second mot supplémentaire (Z) à travers la liaison infrarouge (370, 372, 4, 174, 171) avant la validation du numéro personnel dans le combiné, et en ce que le module fixe (1) comprend des moyens (10) pour mémoriser le second mot supplémentaire reçu (Z), des moyens (110) pour mémoriser des seconds mots supplémentaires ainsi que des ensembles de préfixes de numéro d'appel assignés respectivement à des zones de taxation, des moyens (10) pour comparar le second mot supplémentaire reçu avec les seconds mots supplémentaires mémorisés en vue de sélectionner un ensemble de préfixes, des moyens (10) pour comparer le préfixe du numéro d'appel composé par les moyens de numérotation (380, 30) avec les préfixes de l'ensemble sélectionné et des moyens pour libérer la ligne téléphonique (2) et pour émettre à travers la liaison infrarouge (170, 172, 4, 374, 371) un message particulier qui commande l'affichage d'un mot particulier (REDECROCHER) dans les afficheurs (390) du combiné lorsque le préfixe du numéro d'appel est différent de tous les préfixes de l'ensemble sélectionné.

7. Poste téléphonique conforme à l'une des revendications 1 à 6, caractérisé en ce que les mots de taxe sont transmis à travers la liaison infrarouge (4) en synchronisme entre des mots d'échantillon de parole délivrés par le convertisseur analogique-numérique (150) du module fixe (1).

8. Poste téléphonique conforme à l'une des revendications 1 à 6, caractérisé en ce que les mots de taxe sont transmis à travers la liaison infrarouge (4) sur une fréquence porteuse différente de celle ($f_{13}$) des mots d'échantillon de parole délivrés par le convertisseur analogique-numérique (150) du module fixe (1).

9. Poste téléphonique conforme à l'une des revendications 1 à 8, caractérisé en ce que le combiné (3) comprend des moyens (30) pour produire un mot d'accusé de réception à travers la liaison infrarouge (4) en réponse à un mot de taxe reçu, et en ce que le module fixe (1) comprend des moyens (10) pour compter les mots produits d'accusé de réception et des moyens (10) pour comparer la différence du compte de taxes des moyens de comptage de taxes (10, 12) du module fixe et du compte des mots d'accusé de réception avec un premier nombre prédéterminé (K3) en vue de libérer la ligne téléphonique (2) dès que ladite différence est égale au premier nombre déterminé.

10. Poste téléphonique conforme à la revendication 9, caractérisé en ce que le module fixe (1) comprend des moyens (10) remis à zéro par chaque mot produit d'accusé de réception pour compter les impulsions de taxe jusqu'à un second nombre prédéterminé (K2) en vue de libérer la ligne téléphonique (2) dès que des mots d'accusé de réception successifs en nombre égal au second nombre prédéterminé (K2) ne sont pas produits en réponse à des impulsions de taxe successives en nombre égal au second nombre prédéterminé.

11. Poste téléphonique conforme à la revendication 9 ou 10, caractérisé en ce que les mots d'accusé de réception sont transmis à travers la liaison infrarouge (4) en synchronisme entre des mots d'échantillon de parole délivrés par le convertisseur analogique-numérique (350) du combiné (3).

12. Poste téléphonique conforme à la revendication 9 ou 10, caractérisé en ce que les mots d'accusé de réception sont transmis à travers la liaison infrarouge (4) sur une fréquence porteuse différente de celle ($f_{31}$) des mots d'échantillons de parole délivrés par le convertisseur analogique-numérique (350) du combiné (3).

13. Poste téléphonique conforme à l'une des revendications 1 à 12, caractérisé en ce que le combiné (3) comprend une mémoire morte (311) de préférence programmable pour mémoriser le compte de taxes cumulées de communications téléphoniques, des moyens (30) pour comparer le compte de taxes cumulées à un entier prédéterminé (maximum de taxes), et des moyens (30) pour maintenir le combiné en état de raccrochage dès que le compte de taxes comulées est égal à l'entier prédéterminé.

14. Poste téléphonique conforme à la revendication 13, caractérisé en ce que les moyens pour maintenir le combiné en état de raccrochage (30) commandent l'affichage d'un mot prédéterminé (HORS SERVICE) dans les afficheurs (390) dès que le compte de taxes cumulées est égal à l'entier prédéterminé.

15. Poste téléphonique conforme à la revendication 13 ou 14, caractérisé en ce que le combiné comprend des moyens (30) pour comparer le compte de taxes cumulées à un second entier prédéterminé sensiblement inférieur à l'entier prédéterminé (maximum ex taxes) en vue de commander l'affichage d'un mot particulier (RESTE 10 TAXES) dans les afficheurs (390) lorsque le compte de taxes cumulées est égal au second entier prédéterminé.

16. Poste téléphonique conforme à l'une des revendications 1 à 15, caractérisé en ce que le module fixe (1) comprend des moyens de commutation bidirectionnels (30, 152, 153) entre les moyens d'émission et de réception (17) et les convertisseurs (150, 151) du module fixe pour prendre et libérer la ligne téléphonique (2) respectivement après la mémorisation d'un mot personnel validé et en réponse à un mot de raccrochage délivré par le combiné via la liaison infrarouge lorsque les moyens de simulation de raccrochage (382) sont excités pour la rupture de la communication.

17. Poste téléphonique conforme à la revendication 16, caractérisé en ce que les moyens (10, 16) pour retransmettre le numéro personnel et le compte de taxes commandent la prise de la ligne téléphonique (2) à travers, les moyens de commutation (152, 153) après la rupture de la communication, puis transmettent le numéro personnel et le compte de taxes sur la ligne (2) à travers un modem (16) et enfin commandent la libération de la ligne à travers les moyens de commutation (152, 153) tant que le module fixe n'a pas reçu un mot dit de décrochage émis par le combiné (3) à travers la liaison infrarouge (4).

18. Poste téléphonique conforme à la revendication 17, caractérisé en ce que le module fixe (1) comprend des moyens (111) pour mémoriser au numéro qui est assigné au module fixe et qui est transmis sur la ligne téléphonique (2) conjointement au numéro personnel et au compte de taxes.

19. Poste téléphonique conforme à l'une des revendications 1 à 18, caractérisé en ce que le combiné est conformé en deux demi-boîtiers (B1, B2) reliés par une charnière (CH) et rabattables l'un sur l'autre pour former un boîtier compact.

20. Poste téléphonique conforme à la revendication 19, caractérisé en ce que l'un (B1) des demi-boîtiers comporte au moins l'écouteur (E) et les moyens d'émission et de réception (37) du combiné et en ce que l'autre demi-boîtier (B2) comporte le microphone (M) et de préférence le clavier (380) des moyens numériques de numérotation et les afficheurs (390) du combiné.

21. Poste téléphonique conforme à la revendication 19 ou 20, caractérisé en ce que l'un (B1) des demi-boîtiers comporte une touche (382) pour l'excitation desdits moyens de simulation de décrochage et de raccrochage qui maintient en raccrochage le combiné lorsque les demi-boîtiers (B1, B2) sont rabattus l'un sur l'autre.

22. Poste téléphonique conforme à l'une des revendications 19 à 21, caractérisé en ce que le combiné (3) comporte des moyens de verrouillage (383, 384) des demi-boîtiers rabattus (B1, B2) qui déconnectent l'alimentation du combiné (3).

23. Poste téléphonique conforme à la revendication 13 et à l'une des revendications précédentes, caractérisé en ce que le combiné comprend une prise dits de test (381) notamment pour remettre à zéro la mémoire morte (311) mémorisant le compte de taxes cumulées et modifier le mot personnel.

24. Poste téléphonique conforme à l'une des revendications 1 à 23, caractérisé en ce que la liaison infrarouge (4) est composés en partie de fibres optiques dont une extrémité est à proximité des moyens d'émission et de réception (17) du module fixe (1) et vers l'autre extrémité desquelles peuvent être orientés les moyens d'émission et de réception (37) du combiné (3).

25. Poste téléphonique conforme à l'une des revendications 1 à 23, caractérisé en ce que le module fixe (1) est incorporé dans le plafond (54) d'une cabine téléphonique publique (5).

26. Poste téléphonique conforme à la revendication 24, caractérisé en ce que ladite autre extrémité des fibres optiques est incorporée dans le plafond (54) d'une cabine téléphonique publique (5).

27. Poste téléphonique conforme à la revendication 25 ou 26, caractérisé en ce que les parois (53) de la cabine (5) sont opaques au rayonnement infrarouge.

28. Poste téléphonique conforme à l'une des revendications 25 à 27, caractérisé en ce que le module fixe (1) commande des moyens de visualisation (55) incorporés à une paroi (53) de la cabine (5), à l'un au moins des trois états suivants correspondant à aucune liaison entre le combiné (3) et le module fixe (1) (EN SERVICE), à la liaison effective infrarouge entre le combiné (3) et le module fixe (1) (PATIENTEZ), et à une mise HORS SERVICE du module fixe (1).

29. Poste téléphonique conforme à l'une des revendications 1 à 2, caractérisé en ce que le combiné (3) est inclus dans un véhicule, tel que le tableau de bord d'une automobile et a ses moyens d'émission et de réception (37) intégré à la carrosserie du véhicule, et en ce que le module fixe (1) est incorporé dans une borne le long d'une voie de circulation du véhicule.

**Patentansprüche**

1. Telefonapparat mit Zweirichtungsinfrarotverbindung (4) zwischen Handapparat (3) und mit einer Teilnehmertelefonleitung (2) verbundenem ortsfesten Modul (1),

wobei der ortsfeste Modul (1) einen Analog-Digital-Umsetzer (150) und einen Digital-Analog-Umsetzer (151), die mit der Telefonleitung (2) verbunden sind, sowie Sendemittel (170, 172) und Empfangsmittel (174, 171) für digitale Signale jeweils zwischen den Umsetzern und der Infrarotverbindung umfaßt,

und wobei der Handapparat (3) Sendemittel (370, 372) und Empfangsmittel (374, 371) für digitale Signale über die Infrarotverbindung (4), ein Mikrofon (M), einen Analog-Digital-Umsetzer (350) zwischen dem Mikrofon und den Sendemitteln des Handapparats, einen Hörer (E), einen Digital-Analog-Umsetzer (351) zwischen den Empfangsmitteln des Handapparats und dem Hörer, mit den Sendemitteln (370, 372) des Handapparats verbindbare digitale Wählmittel (380, 30) und mit den Sendemitteln (370, 372) des Handapparats verbindbare Simulationsmittel (382, 30) zum Hörerabnehmen und -auflegen umfaßt, dadurch gekennzeichnet,

daß der Handapparat (3) Mittel (30, 311) zum Bestätigen einer dem Handapparat (3) zugeordneten persönlichen und vertraulischen Nummer, wobei die persönliche Nummer durch den Benutzer mittels Wählmitteln (380) zusammen gesetzt und einmal bestätigt über die Infrarotverbindung (370, 372, 4, 174, 171) des Handapparats zum ortsfesten Modul (1) nach Ansteuerung der Simulationsmittel zum Hörerabnehmen (382, 30) und vor der Anzapfung der Telefonleitung (2) übermittelt wird, und Gebührenzählmittel (30, 32) zum Erhöhen einer Gebührenzählung für die Verbindung im Speicher im Verhältnis zum Empfang digitaler Gebührenwörter und zum Anzeigen der gespeicherten Gebührenzählung für die Verbindung auf Anzeigegeräten (390) des Handapparats umfaßt, und

daß der ortsfeste Modul (1) Mittel (10, 12) zum Speichern der durch den Handapparat (3) übermittelten persönlichen Nummer, Mittel (14) zum Detektieren der auf der Telefonleitung (2) übertragenen Gebührenimpulse, Mittel (10, 12) zum Zählen der detektierten Gebührenimpulse, Mittel (10, 154) zum Übermitteln eines digitalen Gebührenwortes über die Infrarotverbindung (170, 172, 4, 374, 371) zu den Gebührenzählmitteln (30, 32, 390) des Handapparats in Antwort auf jeden detektierten Gebührenimpuls und mit der Telefonleitung (2) verbundene Mittel (10, 16) zum Übermitteln der persönlichen Nummer und der Zählung von im ortsfesten Modul (1) gespeicherten Gebühren über die Telefonleitung nach der Unterbrenchung der Telefonverbindung durch die Simulationsmittel (382, 30) für Hörerauflegen des Handapparats und wenn das Steuerungsorgan in Empfangszustand ist, umfaßt.

2. Telefonapparat nach Anspruch 1, dadurch gekennzeichnet, daß die Mittel zum Bestätigen der persönlichen Nummer im Handapparat (3) einen vorzugsweise programmierbaren, die persönliche Nummer enthaltenden Festwertspeicher (311), Mittel (30) zum Vergleichen der durch die Wählmittel (380) zusammengesetzten persönlichen Nummer und der im Festwertspeicher (311) gespeicherten persönlichen Nummer und Mittel (30) zum Ausgeben der gespeicherten persönlichen Nummer über die Infrarotverbindung (370, 372, 4, 174, 171) umfaßt, wenn die verglichenen Nummern gleich sind oder um die Anzeige eines besonderen Wortes (WIEDERWÄHLEN) in den Anzeigegeräten (390) des Handapparats zu befehlen und die Anzapfung der Telefonleitung (2) zu verhindern, wenn die verglichenen Nummern unterschiedlich sind.

3. Telefonapparat nach Anspruch 2, dadurch gekennzeichnet, daß die Mittel zum Bestätigen der persönlichen Nummer im Handapparat (3) Mittel (30, 310) umfassen, um folgend auf jede ausgegebene Ziffer der persönlichen Nummer ein entsprechendes sogenanntes Bestätigungswort entsprechend einem vorbestimmten Algorithmus vorzugsweise in Abhängigkeit von der ausgegebenen Ziffer zu erzeugen, damit folgend auf die ausgegebene Ziffer das Bestätigungswort über die Infrarotverbindung (370, 372, 4, 174, 171) ausgegeben wird, und daß der ortsfeste Modul (1) Mittel (10, 110) zum Bestätigen einer jeden ausgegebenen Ziffer der persönlichen Nummer in Abhängigkeit von dem entsprechenden Bestätigungswort umfaßt, damit die persönliche Nummer gespeichert wird und die Telefonleitung (2) angezapft wird, wenn ihre sämtlichen Ziffern bestätigt worden sind, oder damit eine besondere Nachricht über die Infrarotverbindung (170, 172, 4, 374, 371) in den Handapparat (3) ausgegeben wird, die die Anzeige eines besonderen Worts (WIEDERWÄHLEN) in den Anzeigegeräten (390) befiehlt, und damit die Telefonleitung nicht angezapft wird, wenn wenigstens eine der Ziffern der persönlichen Nummern im ortsfesten Modul (1) nicht bestätigt worden ist.

4. Telefonapparat nach einem der Ansprüche 1 bis 3, dadurch gekennzeichnet, daß der Handapparat (3) Mittel (30, 311) umfaßt, um ein sogenanntes geheimes Bestätigungswort über die Infrarotverbindung (370, 372, 4, 174, 171) in Antwort auf die Ansteuerung der Simulationsmittel (382, 30) zum Hörerabnehmen zu erzeugen, und daß der ortsfeste Modul (1) Mittel (10, 110) umfaßt, um das empfangene geheime Wort mit einem gespeicherten geheimen Wort zu vergleichen, um über die Infrarotverbindung (170, 172, 4, 374, 371) eine besondere Nachricht auszugeben, die die Anzeige eines besonderen Wortes (WIEDERWÄHLEN) in den Anzeigegeräten (390) des Handapparats befiehlt, und die Anzapfung der Telefonleitung (2) zu verhindern, wenn die geheimen verglichenen Wörter unterschiedlich sind.

5. Telefonapparat nach einem der Ansprüche 1 bis 4, dadurch gekennzeichnet, daß der Handapparat (3) und der ortsfeste Model (1) einer durch eine erste Zusatznummer (S) bezeichneten Benutzergruppe zugeordnet sind, daß der Handapparat (3) Mittel (30, 311) umfaßt, um das erste Zusatzwort (S) über die Infrarotverbindung (370, 372, 4, 174, 171) vor Bestätigung der persönlichen Nummer im Handapparat zu erzeugen, und daß der ortsfeste Modul (1) Mittel (10, 111) umfaßt, um das empfangene erste Zusatzwort mit einem gespeicherten Zusatzwort zu vergleichen, um über die Infrarotverbindung (170, 172, 4, 374, 371) eine besondere Nachricht auszugeben, die die Anzeige eines bezonderen Wortes (UNZUGÄNGLICH) in den Anzeigegeräten (390) des Handapparats befiehlt, und die Anzapfung der Telefonleitung (2) zu verhindern, wenn die verglichenen ersten Zusatzwörter unterschiedlich sind, was bedeutet, daß der Handapparat nicht derselben Benutzergruppe wie derjenigen des ortsfesten Moduls zugeordnet ist, wobei die Mittel (10, 16) zum Übermitteln der persönlichen Nummer und der Gebührenzählung das erste Zusatzwort Übermitteln, wenn die Verbindung eingerichtet worden ist.

6. Telefonapparat nach einem der Ansprüche 1 bis 5, dadurch gekennzeichnet, daß der Handapparat (3) Mittel (30, 311) umfaßt, um ein zweites Zusatzwort (Z) über die Infrarotverbindung (370, 372, 4, 174, 171) vor Bestätigung der persönlichen Nummer im Handapparat zu erzeugen, und daß der ortsfeste Modul (1) Mittel (10) zum Speichern des empfangenen zweiten Zusatzwortes (Z), Mittel (110) zum Speichern der zweiten Zusatzwörter sowie entsprechend Gebührenberechnungszonen zugeordnete Vorwahlnummernsätze, Mittel (10) zum Vergleichen des empfangenen zweiten Zusatzwortes mit den gespeicherten zweiten Zusatzwörtern zum Auswählen eines Vorwahlnummersatzes, Mittel (10) zum Vergleichen der durch die Wählmittel (380, 30) zusammengesetzten Anrufvorwahlnummer mit den Vorwahlnummern des ausgewählten Satzes und Mittel umfaßt, um die Telefonleitung (2) freizugeben und um über die Infrarotverbindung (170, 172, 4, 374, 371) eine besondere Nachricht auszugeben, die die Anzeige eines besonderen Wortes (WIEDERAUFLEGEN) in den Anzeigegeräten (390) des Handapparats befiehlt, wenn die Vorwahlnummer der Rufnummer von sämtlichen Vorwahlnummern des ausgewählten Satzes verschieden ist.

7. Telefonapparat nach einem der Ansprüche 1 bis 6, dadurch gekennzeichnet, daß die Gebührenwörter über die Infrarotverbindung (4) synchron zwischen den durch den Analog-Digital-Umsetzer (150) des ortsfesten Moduls (1) ausgegebenen Sprachmusterwörtern übermittelt werden.

8. Telefonapparat nach einem der Ansprüche 1 bis 6, dadurch gekennzeichnet, daß die Gebührenwörter über die Infrarotverbindung (4) auf einer Trägerfrequenz übermittelt werden, die von derjenigen ($f_{13}$) der durch den Analog-Digital-Umsetzer (150) des ortsfesten Moduls (1) ausgegebenen Sprachmusterwörter verschieden ist.

9. Telefonapparat nach einem der Ansprüche 1 bis 8, dadurch gekennzeichnet, daß der Handapparat (3) Mittel (30) umfaßt, um über die Infrarotverbindung (4) ein Quittierwort in Antwort auf ein empfangenes Gebührenwort zu erzeugen, und daß der ortsfeste Modul (1) Mittel (10) zum Zählen der erzeugten Quittierwörter und Mittel (10) zum Vergleichen der Differenz der Gebührenzählung der Mittel (10, 12) zum Gebührenzählen des ortsfesten Moduls und der Zählung der Quittierwörter mit einer ersten vorbestimmten Zahl (K3) umfaßt, um die Telefonleitung (2) freizugeben, sobald die Differenz gleich der ersten vorbestimmten Zahl ist.

10. Telefonapparat nach Anspruch 9, dadurch gekennzeichnet, daß der ortsfeste Modul (1) Mittel (10) umfaßt, die durch jedes erzeugte Quittierwort auf Null gesetzt werden, um die Gebührenimpulse bis zu einer zweiten vorbestimmten Zahl (K2) zu zählen, damit die Telefonleitung (2) freigegeben wird, sowie aufeinanderfolgende Quittierwörter in der Zahl gleich der zweiten vorbestimmten zweiten Zahl (K2) nicht in Antwort auf aufeinanderfolgende Gebührenimpulse in der Zahl gleich der zweiten vorbestimmten Zahl erzeugt werden.

11. Telefonapparat nach Anspruch 9 oder 10, dadurch gekennzeichnet, daß die Quittierwörter über die Infrarotverbindung (4) synchron zwischen durch den Analog-Digital-Umsetzer (350) des Handapparats (3) ausgegebenen Sprachmusterwörtern übermittelt werden.

12. Telefonapparat nach Anspruch 9 oder 10, dadurch gekennzeichnet, daß die Quittierwörter über die Infrarotverbindung (4) auf einer Trägerfrequenz verschieden von derjenigen ($f_{31}$) der durch den Analog-Digital-Umsetzer (350) des Handapparats (3) ausgegebenen Sprachmusterwörter übermittelt werden.

13. Telefonapparat nach einem der Ansprüche 1 bis 12, dadurch gekennzeichnet, daß der Handapparat (3) einen vorzugsweise programmierbaren Festwertspeicher (311) zum Speichern der Zählung von aufgelaufenen Gebühren von Telefonverbindungen, Mittel (30) zum Vergleichen der Zählung von aufgelaufenen Gebühren mit einer vorbestimmten Zahl (Gebührenmaximum) und Mittel (30) zum Halten des Handapparats im Zustand des Höreraufer lagens umfaßt, sowie die Zählung von aufgelaufenen Gebühren gleich der vorbestimmten Zahl ist.

14. Telefonapparat nach Anspruch 13, dadurch gekennzeichnet, daß die Mittel (30) zum Halten des Handapparats im Zustand des Höreraufer legens die Anzeige eines vorbestimmten Wortes (AUSSER BETRIEB) in den Anzeigegeräten (390) befehlen, sowie die Zählung von aufgelaufenen Gebühren gleich der vorbestimmten Zahl ist.

15. Telefonapparat nach Anspruch 13 oder 14, dadurch gekennzeichnet, daß der Handapparat Mittel (30) zum Vergleichen der Zählung von aufgelaufenen Gebühren mit einer zweiten vorbestimmten Zahl, die im wesentlichen kleiner als die vorbestimmte Zahl (Gebührenmaximum) ist, umfaßt, damit die Anzeige eines besonderen Wortes (REST 10 GEBÜHREN) in den Anzeigegeräten (390) befohlen wird, wenn die Zählung von aufgelaufenen Gebühren gleich der zweiten vorbestimmten Zahl ist.

16. Telefonapparat nach einem der Ansprüche 1 bis 15, dadurch gekennzeichnet, daß der ortsfeste Modul (1) bidirektionelle Übertragungsmittel (30, 152, 153) zwischen den Sende- und Empfangsmitteln (17) und den Umsetzern (150, 151) des ortsfesten Moduls umfaßt, um die Telefonleitung (2) jeweils anzuzapfen und freizugeben nach Speicherung eines bestätigten persönlichen Wortes und in Antwort auf ein durch den Handapparat über die Infrarotverbindung ausgegebenes Höreraufer lagwort, wenn die Simulationsmittel (382) zum Höreraufer legen durch die Unterbrechung der Verbindung angesteuert sind.

17. Telefonapparat nach Anspruch 16, dadurch gekennzeichnet, daß die Mittel (10, 16) zum Übermitteln der persönlichen Nummer und der Gebührenzählung die Anzapfung der Telefonleitung (2) über die Umschaltmittel (152, 153) nach Unterbrechung der Verbindung befehlen, dann die persönliche Nummer und die Gebührenzählung über die Leitung (2) über ein Modem (16) übermitteln und schließlich die Freigabe der Leitung über die Umschaltmittel (152, 153) befehlen, solange der ortsfeste Modul kein Bestätigungswort zum Höreraufnehmen empfangen hat, das durch den Handapparat (3) über die Infrarotverbindung (4) ausgegeben wird.

18. Telefonapparat nach Anspruch 17, dadurch gekennzeichnet, daß der ortsfeste Modul (1) Mittel (111) umfaßt, um eine zweite Nummer zu speichern, die dem ortsfesten Modul zugeordnet ist und die über die Telefonleitung (2) zusammen mit der persönlichen Nummer und der Gebührenzählung übermittelt wird.

19. Telefonapparat nach einem der Ansprüche 1 bis 18, dadurch gekennzeichnet, daß der Handapparat als zwei Halbgehäuse, (B1, B2) gebaut ist, die durch ein Scharnier (CH) verbunden sind und zur Bildung eines kompakten Gehäuses aufeinanderklappbar sind.

20. Telefonapparat nach Anspruch 19, dadurch gekennzeichnet, daß eines (B1) der Halbgehäuse wenigstens den Hörer (E) und die Sende- und Empfangsmittel (37) des Handapparats enthält und daß das andere Halbgehäuse (B2) das Mikrofon (M) und vorzugsweise das Tastengerät (380) der digitalen Wählmittel und die Anzeigegeräte (390) des Handapparats enthält.

21. Telefonapparat nach Anspruch 19 oder 20, dadurch gekennzeichnet, daß eines (B1) der Halbgehäuse eine Taste (382) zur Ansteuerung der Simulationsmittel zum Höreraufnehmen und -auflegen enthält, die den Handapparat im Zustand des aufgelegten Hörers hält, wenn die Halbgehäuse (B1, B2) aufeinandergeklappt sind.

22. Telefonapparat nach einem der Ansprüche 19 bis 21, dadurch gekennzeichnet, daß der Handapparat (3) Mittel (383, 384) zum Verriegeln der umgeklappten Halbgehäuse (B1, B2) enthält, die die Versorgung des Handapparats (3) unterbrechen.

23. Telefonapparat nach Anspruch 13, und einem der vorhergehenden Ansprüche, dadurch gekennzeichnet, daß der Handapparat eine sogenannte Testbuchse (381) insbesondere zum Nullsetzen des Festwertspeichers (311), der die Zählung von aufgelaufenen Gebühren speichert, und zum Abändern des persönlichen Wortes umfaßt.

24. Telefonapparat nach einem der Ansprüche 1 bis 23, dadurch gekennzeichnet, daß die Infrarotverbindung (4) zum Teil aus optischen Fasern zusammengesetzt ist, deren eines Ende in der Nähe der Sende- und Empfangsmittel (17) des ortsfesten Moduls (1) liegt und zu deren anderem Ende die Sende- und Empfangsmittel (37) des Handapparats (3) orientiert werden können.

25. Telefonapparat nach einem der Ansprüche 1 bis 23, dadurch gekennzeichnet, daß der ortsfeste Modul (1) in der Decke (54) einer öffentlichen Telefonzelle (5) eingebaut ist.

26. Telefonapparat nach Anspruch 24, dadurch gekennzeichnet, daß das andere Ende der optischen Fasern in der Decke (54) einer öffentlichen Telefonzelle (5) eingebaut ist.

27. Telefonapparat nach Anspruch 25 oder 26, dadurch gekennzeichnet, daß die Wände (53) der Zelle (5) für die Infrarotstrahlung undurchlässig sind.

28. Telefonapparat nach einem der Ansprüche 25 bis 27, dadurch gekennzeichnet, daß der ortsfeste Modul (1) in einer Wand (53) der Zelle (5) eingebaute Anzeigemittel (55) in einem von wenigstens drei folgenden Zuständen entsprechend irgendeiner Verbindung zwischen dem Handapparat (3) und dem ortsfesten Modul (1) (IN BETRIEB), der wirksamen Infrarotverbindung zwischen dem Handapparat (3) und dem ortsfesten Modul (1) (GEDULDEN) und einer Umstellung (AUSSER BETRIEB) des ortsfesten Moduls (1) umfaßt.

29. Telefonapparat nach einem der Ansprüche 1 bis 2, dadurch gekennzeichnet, daß der Handapparat (3) in einem Fahrzeug wie einer Instrumententafel eines Automobils enthalten ist und in der Karosserie des Fahrzeugs integrierte Sende- und Empfangsmittel (37) besitzt und daß der ortsfeste Modul (1) in einer Begrenzung längs einer Fahrzeugfahrbahn eingebaut ist.

## Claims

1. Telephone set having a bidirectional infrared link (4) between handset (3) and fixed module (1) connected to a subscriber telephone line (2), the fixed module (1) comprising an analog-digital converter (150) and a digital-analog converter (151) both coupled to the telephone line (2) and means respectively between said converters and said infrared link for emitting (170, 172) and receiving (174, 171) digital signals, and the handset (3) comprising means for emitting (370, 372) and receiving (374, 371) digital signals through said infrared link (4), a microphone (M), an analog-digital converter (350) between the microphone and the handset emitting means, an earphone (E), a digital-analog converter (351) between the handset receiving means and the earphone, digital dialing means (380, 30) connectable to the handset emitting means (370, 372), and off-hook and on-hook simulating means (382, 30) connectable to the handset emitting means (370, 372), characterized in that the handset (3) comprises means (30, 311) for validating a personal and confidential number assigned to the handset (3), the personal number being dialed by the user with the help of the dialing means (380) and transmitted after validation through the infrared link (370, 372, 4, 174, 171) from the handset to the fixed module (1) after energization of the on-hook simulating means (382, 30) and before seizing of the telephone line (2), and charge counting means (30, 32) for incrementing a stored call-charge account responsive to charge digital words and for displaying the stored call-charge account on displaying units (390) in the handset, and in that the fixed module (1) comprises means (10, 12) for storing the personal number transmitted by the handset (3), means (14) for detecting charge pulses carried on the telephone line (2), means (10, 12) for counting the detected charge pulses, means (10, 154) for transmitting a charge digital word through the infrared link (170, 172, 4, 374, 371) to the handset charge counting means (30, 32, 390) in response to each detected charge pulse, and means (10, 16) coupled to the telephone line (2) for transmitting the personal number and the charge account stored in the fixed module (1) onto the telephone line after the on-hook simulating means (382, 30) breaks off the telephone call and when the management means is in a receiving condition.

2. Telephone set according to claim 1, characterized in that the personal number validating means in the handset (3) comprise a read-only memory (311) preferably programmable containing the personal number, means (30) for comparing the personal number dialed by the dialing means (380) and the personal number stored in the read-only memory (311), and means (30) for emitting the stored personal number through the infrared link (370, 372, 4, 174, 171) when the compared numbers are equal or for controlling the display of a specific word (DIAL AGAIN) on the handset displaying units (390) and preventing the seizing of the telephone line (2) when the compared numbers are different.

3. Telephone set according to claim 2, characterized in that the personal number validating means in the handset (3) comprise means (30, 310) for producing further to each emitted digit of the personal number, a respective so-called validation word according to a predetermined algorithm depending preferably uqon the emitted digit, in order to emit further to the emitted digit, the validation word through the infrared link (370, 372, 4, 174, 171), and in that the fixed module (1) comprises means (10, 110) for validating each emitted digit of the personal number in dependence upon the respective validation word in order to store the personal number and to seize the telephone line (2) when all its digits are validated, or in order to emit through the infrared link (170, 172, 4, 374, 371) a specific message to the handset (3) that triggers in the handset the display of a specific word (DIAL AGAIN) on the displaying units (390) and in order not to seize the telephone line when at least one of the personal number digits is not validated in the fixed module (1).

4. Telephone set according to one of claims 1 to 3, characterized in that the handset (3) comprises means (30, 311) for producing a so-called secret word through the infrared link (370, 372, 4, 174, 171) in response to the energization of the hook-off simulating means (382, 30), and in that the fixed module (1) comprises means (10, 110) for comparing the received secret word with a stored secret word in order to emit a specific message that triggers through the infrared link (170, 172, 4, 374, 371) the display of a specific word (OFF HOOK AGAIN) in the handset displaying units (390) and to prevent the seize of the telephone line (2) when the compared secret words are different.

5. Telephone set according to one of claims 1 to 4, characterized in that the handset (3) and the fixed module (1) are assigned to a user group designated by a first additional number (S), and in that the handset (3) comprises means (30, 311) for producing the first additional number (S) through the infrared link (370, 372, 4, 174, 171) before the validation of the personal number in the handset, and in that the fixed module (1) comprises means (10, 111) for comparing the received first additional word with a stored additional word in order to emit through the infrared link (170, 172, 4, 374, 371) a specific message that triggers the display of a specific word (INACCESSIBLE) on the handset displaying units (390) and to prevent the seize of the telephone line (2) when the compared first additional words are different, that meaning that the handset is not assigned to the same user group that the fixed module one, said personal number and the charge account transmitting means (10, 16) transmitting the first additional word when the call is established.

6. Telephone set according to one of claims 1 to 5, characterized in that the handset (3) comprises means (30, 311) for producing a second additional word (Z) through the infrared link (370, 372, 4, 174, 171) before the validation of the personal number in the handset, and in that the fixed module (1) comprises means (10) for storing the received second additional word (Z), means (110) for storing second additional words and groups of call-number prefix respectively assigned to charging zones, means (10) for comparing the received second additional word with the second stored additional words in order to select a prefix group, means (10) for comparing the prefix of the call number dialed by the dialing means (380, 30) with the prefix of the selected group and means for releasing the telephone line (2) and for emitting through the infrared link (170, 172, 4, 374, 371) a specific message that triggers the display of a specific word (OFF-HOOK AGAIN) on the handset displaying units (390) when the call-number prefix differs of all the prefix of the selected group.

7. Telephone set according to one of claims 1 to 6, characterized in that the charge words are transmitted through the infrared link (4) in synchronism between voice sample words delivered from the analog-digital converter (150) of the fixed module (1).

8. Telephone set according to one of claims 1 to 6, characterized in that the charge words are transmitted through the infrared link (4) on a carrier frequency different from that ($f_{13}$) of the voice sample words delivered from the analog-digital converter (150) of the fixed module (1).

9. Telephone set according to one of claims 1 to 8, characterized in that the handset (3) comprises means (30) for producing an acknowledgement word through the infrared link (4) in response to a received charge word, and in that the fixed module (1) comprises means (10) for counting the produced acknowledgement words and means (10) for comparing the difference between the charges account in the charge counting means (10, 12) of the fixed module and the acknowledgement word account with a first predetermined number (K3) in order to release the telephone line (2) as soon as said difference is equal to the first predetermined word.

10. Telephone set according to claim 9, characterized in that the fixed module (1) comprises means (10) reset to zero by each produced acknowledgement word for counting the charge pulses up to a second predetermined number (K3) in order to release the telephone line (2) as soon as successive acknowledgement words in number equal to the second predetermined word (K2) are not produced in response to successive charge pulses in number equal to the second predetermined word.

11. Telephone set according to claim 9 or 10, characterized in that the acknowledgement words are transmitted through the infrared link (4) in synchronism between voice sample words delivered from the analog-digital converter (350) of the handset (3).

12. Telephone set according to claim 9 or 10, characterized in that the acknowledgement words are transmitted through the infrared link (4) on a carrier frequency different from that ($f_{31}$) of the voice sample words delivered from the analog-digital converter (350) of the handset (3).

13. Telephone set according to one of claims 1 to 12, characterized in that the handset (3) comprises a read-only memory (311) preferably programmable for storing the cumulated charge account of the telephone calls, means (30) for comparing the cumulated charge account to a predetermined integer (maximum of charges), and means (30) for keeping the handset in an on-hook condition as soon as the cumulated charge account is equal to the predetermined integer.

14. Telephone set according to claim 13, characterized in that the means (30) for keeping the handset in an on-hook condition trigger the display of a predetermined word (OUT OF SERVICE) on the displaying units (390) as soon as the cumulated charge account is equal to the predetermined integer.

15. Telephone set according to claim 13 or 14, characterized in that the handset comprises means (30) for comparing the cumulated charge account with a second predetermined integer substantially less than the predetermined integer (maximum of charges) in order to trigger the display of a specific word (REMAINS 10 CHARGE UNITS) on the displaying units (390) when the cumulated charge account is equal to the second predetermined integer.

16. Telephone set according to one of claims 1 to 15, characterized in that the fixed module (1) comprises bidirectional switching means (10, 152, 153) between the emitting and receiving means (17) and the converters (150, 151) in the fixed module for seizing and releasing the telephone line (2) respectively after the storage of a validated personal number and in response to an on-hook word delivered from the handset via the infrared link when the on-hook simulating means (382) are energized in order to break off the call.

17. Telephone set according to claim 16, characterized in that the means (10, 16) for transmitting the personal number and the charge account trigger the connection of the telephone line (2) through the switching means (152, 153) before the call breaking off, then transmit the personal number and the charge account on the line (2) through a modem (16) and finally trigger the call release through the switching means (152, 153) as long as the fixed module has not received a so-called off-hook word emitted by the handset (3) through the infrared link (4).

18. Telephone set according to claim 17, characterized in that the fixed module (1) comprises means (111) for storing a number assigned to the fixed module and transmitted on the telephone line (2) together with the personal number and the charge account.

19. Telephone set according to one of claims 1 to 18, characterized in that the handset is formed of two half-cases (B1, B2) jointed by a hinge (CH) and which can be turned back one against the other for forming a compact case.

20. Telephone set according to one of claims 19 to 21, characterized in that one (B1) of the half-cases comprises at least the earphone (E) and the handset emitting and receiving means (37) and in that the other half-case (B2) comprises the microphone (M) and preferably the keyboard (380) of the digital dialing means and the displaying units (390) of the handset.

21. Telephone set according to claim 19 to 20, characterized in that one (B1) of the half-cases comprises a push-button (382) for the energization of said off-hook and on-hook simulating means thereby keeping the handset in on-hook condition when the half-cases (B1, B3) are turned back against one against the other.

22. Telephone set according to one of claims 19 to 21, characterized in that the handset (3) comprises turned-back half-cases locking means (383, 384) disconnecting the power supply of the handset (3).

23. Telephone set according to claim 13 and to one of the preceding claims, characterized in that the handset comprises a so-called test plug (381) particularly for resetting to zero the read-only memory (311) storing the cumulated-charge account and modifying the personal number.

24. Telephone set according to one of claims 1 to 23, characterized in that the infrared link (4) is partially composed of optical fibers one end of which is near to the emitting and receiving means (17) of the fixed module (1) and towards the other end of which can be oriented to the emitting and receiving means (37) of the handset (3).

25. Telephone set according to one of claims 1 to 23, characterized in that the fixed module (1) is integrated in the ceiling (54) of a public telephone box (5).

26. Telephone set according to claim 24, characterized in that said other end of the optical fibers is integrated into the ceiling (54) of a public telephone box (5).

27. Telephone set according to one of claims 25 or 26, characterized in that the walls (53) of the box (5) are opaque to the infrared radiation.

28. Telephone set according to one of claims 25 to 27, characterized in that the fixed module (1) commands visualization means (55) integrated in a wall (53) of the box (5), at least one of the three following states corresponding to no link between the handset (3) and the fixed module (1) (ON SERVICE), to the effective infrared link between the handset (3) and the fixed module (1) (WAIT) and to the putting OUT OF SERVICE of the fixed module (1).

29. Telephone set according to one of claims 1 to 2, characterized in that the handset (3) is included in a vehicle, such as in the dash-board of a motor car, and has its emitting and receiving means (37) integrated in the vehicle body, and in that the fixed module (1) is integrated in a marker staying along a vehicle traffic way.

0 115 240

# FIG.1

# FIG.2

MODULE FIXE 1

1

**0 115 240**

# FIG.3
COMBINE 3

Fig. 3 — Combiné 3 : schéma synoptique.

- $f_{13}$, $f_{31}$
- 37
- 374, 372
- 375, 373
- 371 — DEMODULATEUR HF
- 370 — MODULATEUR HF
- E — ECOUTEUR
- 351 — N/A
- 355
- 306
- 354
- 350 — A/N
- M — MICROPHONE
- accusé de reception
- 307, 305, 308
- 39
- 390 — AFFICHEURS
- 391 — PRISE TEST
- 30 — UNITE CENTRALE DE TRAITEMENT
- 380 — CLAVIER
- 381 — TOUCHE TEST
- 382 — INTERRUPTEUR Décrochage / Raccrochage
- 38
- 300

**ROM**
- instructions
- programme test
- 310

**PROM**
- mot secret
- mot personnel
- Chiffre(s) supplémentaire(s) S, Z
- compte de taxes cumulées ≤ maxi
- 311

**RAM**
- N° d'appel
- compte de taxes
- compte de taxes cumulées
- 32

2

# FIG.4B

*384*     *E*     *382*     *B1*     *390*     *B2*     *M*     *383*

*374,*
*372*

RACCROCH

| INSTRUCTIONS | | |
|---|---|---|
| | NOM | N° |
| 1 | | |
| 2 | | |
| | | |

Télécommunication

AFFICHAGE ⊟ ⊟ ⊟

*381*

| | | | | |
|---|---|---|---|---|
| 1 | 2 | 3 | TEST | |
| 4 | 5 | 6 | M+ | ΣT |
| 7 | 8 | 9 | RM | RAZ |
| ∗ | 0 | # | C | |

*391*

*384*     *CH*     *380*     *383*

# FIG.4A

*374,372*     *E*     *382*     *CH*     *380*     *M*     *383*

*384*     *B1*     *B2*     *391*

0 115 240

# FIG.5